# EUROPEAN PATENT APPLICATION

(11) **EP 4 838 766 A1**
(43) Date of publication of application: **11.11.2026**
(21) Application number: 25174425.6
(22) Date of filing: 06.05.2025
(51) Int. Cl.: H02K 33/16, H02K 1/34, H02K 41/03, F04B 35/04

(54) **LINEAR ACTUATOR, COMPRESSOR, PUMP, AND HOUSEHOLD APPLIANCE**

(71) Applicant: BSH Hausgeräte GmbH, 81739 München (DE)
(72) Inventor: Stavrovsky, Vladimir, 07101 Michalovce (SK); Vapnár, Jozef, 07101 Michalovce (SK); Bocinec, Matus, 07101 Michalovce (SK)

(57) **Abstract**

Disclosed is a linear actuator comprising at least one stator having at least one electrical coil, at least one magnet, a mover and a back iron, which are adapted to generate, in consequence of an electric power input a linearly reciprocating movement of the mover relative to the stator, wherein the mover and the back iron are a single component, a compressor and a pump and respectively comprising such linear actuator, and a household appliance comprising such compressor and/or such pump.

## Description

The present invention concerns a linear actuator, a compressor comprising such linear actuator, a pump comprising such linear actuator, and a household appliance including such compressor and/or pump.

Linear actuators are machine components which produce a usually reciprocating linear motion from energy, in particular from electrical input supplied thereto. In particular, they may be included in compressors and/or pumps as those integrated in household appliances, for example.

From US 2020/0260628 A1, a linear compressor is known which comprises a piston configured to linearly reciprocate in a cylinder so as to compress a refrigerant. For driving the motion, the compressor comprises an inner and an outer stator arranged with an interspace in-between, and a permanent magnet connected to the piston and positioned in the interspace. Mutual electromagnetic force between the permanent magnet, the inner stator, and the outer stator causes a linear motion of the permanent magnet and, therewith, of the piston connected thereto. US 2020/0395836 A1 discloses a compressor having a linear motor comprising an outer stator, an inner stator, and a mover which is located between the outer and the inner stator and coupled to a piston. The outer stator includes a plurality of laminated blocks, on which a coil is wound. Two magnets are coupled to the inner stator. Disadvantage of the known solutions are high complexity of the production, different material dilatation, dimension tolerances of components affecting the misalignment of air gap between mover and stator.

It is an object of the present invention to provide an improved linear actuator, an improved compressor, an improved pump, and an improved household appliance.

The object is achieved by a linear actuator according to claim 1, by a compressor according to claim 7, by a pump according to claim 8, and by a household appliance according to claim 9. Advantageous embodiments are disclosed in the dependent claims, in the description, and in the drawings.

A linear actuator according to the present invention comprises at least one stator having at least one electrical coil, at least one magnet, a mover and a back iron adapted to form a return path of flux between adjacent magnets. The components are adapted to generate, in consequence of an electric power input a linearly reciprocating movement of the mover relative to the stator. The mover and the back iron are a single component. They are manufactured as an integral part, for instance made from a solid electromagnetic material. Due to the integral single part design of the mover and the back iron, a reduction in the complexity of the mechanical design, a decrease in the number of assembly steps, and a simplification of the tolerance chain that ensures the actuator air gap between the mover and stator are achieved.

Preferably, the mover is a cylinder which is guided on a stationary piston. By means of this, the integration of the back iron is facilitated.

In order to reduce the weight of the mover, the mover has a reduced radial thickness between those areas, which are adapted to delimit an air space to opposite stator teeth. By means of this, the mover has a plurality of outer teeth.

In one embodiment, the linear actuator is of the type of a transverse-flux linear actuator. Thereby, the at least one stator can have a plurality of circle-segments which are spaced apart from each other in circumferential direction by alternating magnets, wherein from every circle-segment one stator tooth extends radially inwards and carries one coil. For instance, six identical circle-segments and six magnets are provided, wherein the magnets are positioned in circumferential direction with opposite polarity. Preferably, the magnets have the same axial and radial extensions as the circle-segments.

In addition, a second stator can be provided in an axial distance and in axial alignment to the first stator having the same design as the first stator. In this embodiment, the stators are arranged offset to each other such that the axial adjacent magnets are arranged with their opposite polarities facing each other. Additionally, one axial adjacent stator teeth a coil is provided.

In order to achieve to maximise the linear stroke of the mover, the mover has such an axial extension that depending on the axial position of the mover, its teeth are in axial overlap with the first stator, the second stator or with both stators.

A compressor according to the present invention comprises a housing and a linear actuator according to an embodiment of the present invention. Therein, the linear actuator is preferably configured to vary a volume of a compression chamber formed by the compressor. By integrating compressor components into the actuator's electromagnetic circuit, a direct force transfer is facilitated to the compressor pump. Based on this and on the single component design of the mover and the back iron, assembly steps and precision requirements are reduced.

Likewise, a pump according to the present invention comprises a housing and a linear actuator according to an embodiment of the present invention. By integrating compressor components into the actuator's electromagnetic circuit, a direct force transfer is facilitated to the compressor pump. Based on this and on the single component design of the mover and the back iron, assembly steps and precision requirements are reduced.

A household appliance according to the present invention comprises a compressor and/or a pump respectively in accordance with an embodiment of the present invention. The household appliance in particular may be a major appliance such as a washing machine, a tumble drier, a dishwasher, a refrigerator, or a freezer.

In what follows, an exemplary embodiment of the present invention is explained with respect to the accompanying drawings. As is to be understood, the various elements and components are depicted as examples only, may be facultative and/or combined in a manner different than that depicted. Reference signs for related elements are used comprehensively and not defined again for each figure. Shown is schematically in
- Figure 1:: a section view of an exemplary embodiment of a linear actuator according to the present invention;
- Figure 2:: an axial view of the embodiment illustrated in Figure 1; and
- Figure 3:: a detailed view of Figure 2.

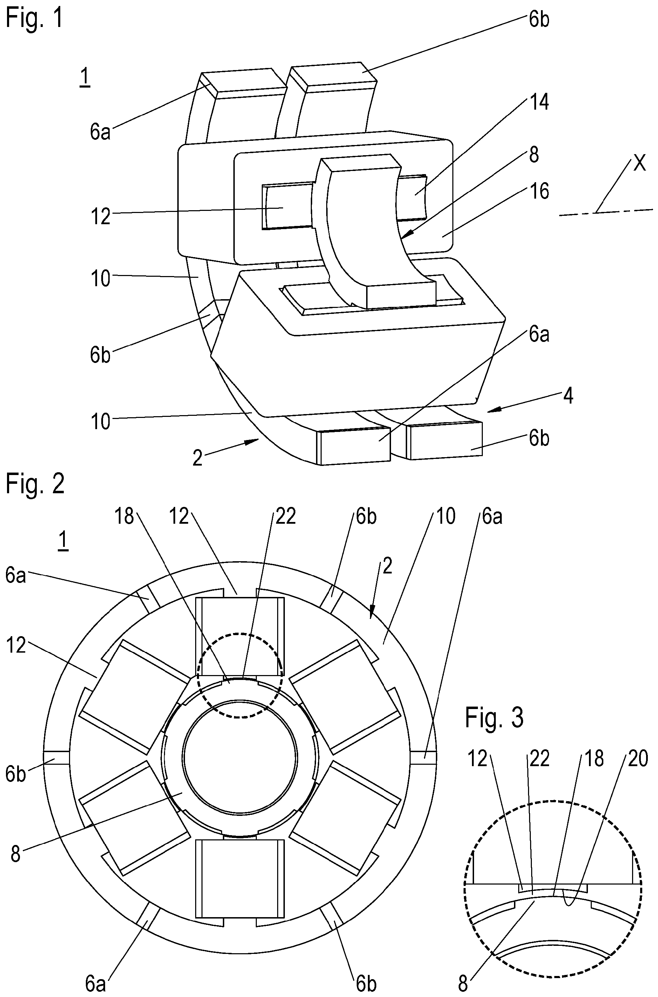

In Figure 1 a sectional view of an embodiment of a linear actuator 1 according to the invention is shown. The line actuator is a transverse-flux linear actuator and integrated in a compressor, a pump or an electric household appliance having a compressor or a pump such as a refrigerator or diswasher.

The linear actuator 1 has a first stator 2 and a second stator 4, a plurality of magnets 6a, 6b, and a mover 8 which is movable in axial direction x.

The stators 2, 4 have the same design. They comprise a plurality of identical circle-segments 10 and magnets 6a, 6b. The circle-segment 10 and magnets 6a, 6b are alternating in circumferential direction, wherein the polarity of the magnets 6a, 6b also changes. Here, circle-segments 10 and six magnets 6a, 6b are provided (see Figure 2). The magnets 6a, 6b are permanent magnets. In radial and axial direction, the magnets 6a, 6b has the same extension as the arc segments 10.

Each circle-segment 10 has a radial protrusion 12, 14 acting as one stator tooth. In sum, every stator 2, 4 has six stator teeth 12, 14.

The stators 2, 4 are in axial alignment and axial spaced apart from each other. Their axial distance is less than their axial extension. They arranged in circumferential direction offset to each other in such a way that the axial adjacent magnets 6a, 6b are arranged with their opposite poles facing each other. Due to the identical stator design, the stator tooth 12, 14 of the stators 2, 4 are also in axial alignment, wherein adjacent stator tooth 12, 14 are carrying one electrical coil 16.

The mover 8 is a cylinder with an integrated back iron. The cylinder 6 is made of a solid electromagnetic material. As shown in Figure 3, between outer circumferent surface areas 18 of the mover 6 and radial inner surfaces 20 of the stator teeth 12, 14, air gaps 22 formed. The outer circumferent surface areas 18 of the mover 8 have a teeth like shape as the wall thickness of the over 6 between them is reduced. The mover 8 has such extension in axial direction x that depending on the axial position of the mover 8, its teeth (outer circumferential surface areas 18) are in axial overlap with one of the stators 2, 4 or with both stators 2,4 (see Figure 1).

Disclosed is a linear actuator comprising at least one stator having at least one electrical coil, at least one magnet, a mover and a back iron, which are adapted to generate, in consequence of an electric power input a linearly reciprocating movement of the mover relative to the stator, wherein the mover and the back iron are a single component, a compressor and a pump and respectively comprising such linear actuator, and a household appliance comprising such compressor and/or such pump.

### Reference signs

- 1: linear actuator
- 2: first stator
- 4: second stator
- 6a: magnet
- 6b: magnet
- 8: mover
- 10: circle-segment
- 12: stator tooth
- 14: stator tooth
- 16: coil
- 18: outer circumferential surface areas of the mover (mover teeth)
- 20: radial inner surface area of the stator teeth
- 22: air gap

- x: centre axis

## Claims

1. Linear actuator (1) comprising
• at least one stator (2) having at least one electrical coil (16),
• at least one magnet (6a, 6b)
• a mover (8); and
• a back iron,
which are adapted to generate, in consequence of an electric power input a linearly reciprocating movement of the mover (8) relative to the stator;
wherein the mover (8) and the back iron are a single component.

2. Linear actuator according to claim 1, wherein the mover (8) is a cylinder which is guided on a stationary piston.

3. Linear actuator according to claim 1 or 2, wherein the mover (8) has outer teeth (18) delimiting an air space (22) to opposite stator teeth (12, 14).

4. Linear actuator according to claims 1, 2 or 3, wherein the at least one stator (2) comprises a plurality of circle-segments (10) which are spaced apart from each other in circumferential direction by alternating magnets (6a, 6b), wherein from every circle-segment (10) one stator tooth (12) extends radially inwards and carries one coil (16).

5. Linear actuator according to any of the preceding claims, wherein a second stator (4) is provided in an axial distance and in axial alignment to the first stator (2) having the same design as the first stator (2), wherein the stators (2, 4) are arranged offset to each other such that the axial adjacent magnets (6a, 6b) are arranged with their opposite poles facing each other, and wherein on adjacent stator teeth (12, 14) one common coil (16) is provided.

6. Linear actuator according to claim 5, wherein depending on the axial position of the mover (8), its teeth (18) in axial overlap with the first stator (2), the second stator (4) or with both stators (2, 4).

7. Compressor comprising a housing and a linear actuator (1) according to one of the preceding claims.

8. Pump comprising a housing and a linear actuator (1) according to any of the claims 1 to 6.

9. Household appliance comprising a compressor according to claim 7 and/or a pump according to claim 8.

10. Household appliance according to claim 9 which is a washing machine, a tumble drier, a dishwasher, a refrigerator, or a freezer.
